# EUROPEAN PATENT APPLICATION

(11) **EP 2 830 011 A1**
(43) Date of publication of application: **28.01.2015**
(21) Application number: 14177840.7
(22) Date of filing: 21.07.2014
(51) Int. Cl.: G06Q 10/06, G06Q 10/10, G06Q 30/00, G06Q 30/06, H04M 3/51

(54) **A time, place and need information based optimization system for customer service**

(30) Priority: 24.07.2013 US 201313949638
(71) Applicant: ZEF Oy, 90250 Oulu (FI)
(72) Inventor: Alasaarela, Jaakko, 90250 Oulu (FI); Julkunen, Janne, 90250 Oulu (FI); Alasaarela, Markku, 90250 Oulu (FI)
(74) Representative: Määttä, Jukka Tapani

(57) **Abstract**

The invention relates to a method, a data network arrangement, a computer program product and a server, by means of which a service platform (150) is accomplished. The service platform comprises several customer interfaces (141) whereby the customer can request a service in the service platform. The service platform prioritizes the received customer requests based on the prioritization value given to different customer events. A customer servant sees the customer requests in the order of importance that is based on the given prioritization value of each customer event. By utilizing the service platform the customer servant can concentrate on serving the customer requests in order of importance.

## Description

The invention relates to an arrangement for optimizing customer service in a web store. The invention relates also to an optimizing method utilized therein. The invention also relates to a computer program to be utilized in the customer service optimization system.

Marketing and selling in the Internet is growing very fast. A marketing or selling place in the Internet is often called a web store. Actual buying or selling operation can be accomplished in a web store by utilizing several application tools that have been developed for making the buying operation as easy as possible for the buying customer.

One basic way to offer products and services to a customer in the Internet is to utilize company specific web pages where information about the products and/or services of the company is shown. The customer can move from one web page to another web page according to his or her needs at that moment. The web store company may record and analyse these customer movements on the web pages. By analysing movements of several customers on the web pages the web store company can deduce how different products and/or services in their selection sell.

One software application utilized for facilitating customers in a buying operation is a so-called comparator. In the comparator a mutual comparison of two or more comparison targets may be accomplished online. A comparison target may be for example a product, a service, a travel destination etc. The purpose of the comparison is to produce to the customer a final result, on the basis of which the "best" target at that moment can be presented from several possible alternative products or services. In the context of a purchasing situation the end result of the comparator can help the customer to make the final decision to buy.

As an example of comparators may be mentioned a two-dimensional online comparator that is presented in the US patent 7,693,743. In the patented method customer needs or opinions are collected in two or more dimensions. The patent presents a data collection and presentation method that functions in a data network, where a step less two-dimensional data collection, evaluation and presentation manner is utilized for collecting customer needs and presenting a comparison result that is calculated from the customer needs. The evaluation results are normalized so that the average of all evaluation points of the evaluator entered into the fourfold is set in the origin and the deviation is set to a standard value. With the described method the given responses can be scaled so that the customer's order of importance of different properties of the evaluation target is detected from the inquiry results, even if the responses given by the customer of the properties being evaluated were to be concentrated close together.

A message-based online chat (Chat or LiveChat) implemented in a data network can also be utilised for comparing, marketing and selling products or services. In the online chat a customer servant of the service provider and a possible buying customer engage in mutual text-based communication with the aid of their own data processing devices. The customer servant can with his or her own text-based messages guide the customer on the web page by answering the questions posed by the customer or by posing his or her own specifying questions.

The online chat can be activated in many ways. There can for example be a button on the service provider's web page, with which a customer on the web page can invite a customer servant of the service provider to an online chat. Alternatively, the customer servant can on his own offer online chat to a customer on the web page. The decision about offering an online chat can be based on actions made by the customer on the service provider's web page.

In patent application US 2013/0144879 there is disclosed a comparator where a comparator user utilizes a comparator. The inquiry questions are presented to a comparator user on a graphic evaluation frame on the screen of the comparator user's data processing device. The comparator user can give his or her evaluation of the properties of the target product or services being evaluated utilizing either a two-dimensional fourfold or a one-dimensional evaluation line.

The comparator comprises also a database which can be utilized for indicating to the service provider's customer servant such situations during the use of the comparator where additional information could be offered to the comparator user by utilizing online chat. This way the evaluation points which are central and important for the decision-making of the comparator user can be gone through also in online chat and the comparator user can thus be offered also such additional information for the basis of his decision-making, which is not included in the evaluation questions included in the comparator.

A company may also have a social media interface where the company shows its products and services. Some examples of social media interfaces are Facebook^{®}, Twitter^{®} and Google Plus^{®}. The users of the social media can give their feedback of the products and services of the company.

If a company utilizes all or most of the above mentioned customer service tools, the situation might be as follows in a time period of fifteen minutes in an exemplary web store. There might be twenty concurrent customers connected online in the web store. Fifteen of the customers may be registered customers. Each customer may go through and read ten web pages during his or her visit to the web store. One customer stays on average about three minutes at the web store. The customers online may open ten important web pages (buying decision web page). Two of the customers may require a chat with the customer servant and exchange ten messages during the chat. Also one e-mail may arrive from a customer, also one stock alarm may be received, two twitter updates from product manufactures. As selling events five products are added to the shopping basket of some customers and two orders are accomplished. Also in a comparator of the web store one hundred answers are given to the comparator questions, thirty products are selected as comparison targets in the comparator and eighty products are opened in the comparator.

In the exemplary web store above 1,400 events has happened in fifteen minutes. In such frenzied environment a customer servant may not be able to be on the ball all the time if he or she does not have any tools for prioritizing different customer events.

The above-mentioned customer events that have been received via one or more customer interfaces may give valuable information to the web store company. Nowadays, information from each interface is managed independently. However, there is a need for a solution where information from several customer interfaces might be integrated as one customer information entity and saved into a data base of the web store. From the database a customer servant of the web store could in a customer service situation retrieve the most important customer information that is needed in that particular selling situation by utilizing one all-embracing customer servant service tool.

An object of the invention is to present a software based service platform which can be utilised on the Internet, which service platform combines information from a web store, a web page, a comparator, online chat, social media interfaces, customer place information and time information to one customer information entity that may be saved in a database. The service platform comprises a software application that prioritizes what important customer events are to be shown on a data processing apparatus of a customer servant at that particular moment. In the service platform according to the invention the online customers may also be divided into several customer groups. In one advantageous embodiment the service platform automatically or the customer servant logged in to the service platform may send to all online customers of a particular customer group a special offer or notification that the customers of the other groups do not get. The objects of the invention are attained with a software based service platform implemented in a server residing on the Internet, which service platform comprises computer program means for receiving and storing customer information that is received in at least one of the following ways: from a web store, a web page, a comparator, an online chat interface or a social media interface. The service platform also comprises computer program means for providing to a customer servant real-time event status information for the most important selling events in the web store at that moment. The service platform advantageously indicates to the customer servant which customer event at that particular moment is the most important one so that the customer servant can concentrate on handling that selling event properly.

An advantage of the invention is that with the service platform according to the invention it is possible to show to the customer servant in real time a view that represents a selling landscape of the web store.

A further advantage of the invention is that the customer servant has a view where the importance of the customer is shown in context of each feed event.

A further advantage of the invention is that time, place and customer needs of each customer can be simultaneously shown on the display of a customer servant's data processing apparatus.

A further advantage of the invention is that the customer servant has control over his or her selling events and that he or she can concentrate on serving customers that have the highest priority status.

A further advantage of the invention is that the customer servant has in service one overall view about the selling landscape which overall view includes all essential information that is needed at that particular moment.

A further advantage of the invention is that in one view it can be seen what products or services are being compared, what kind of needs the customers have, what kind of products or services they are interested in.

A further advantage of the invention is that the customer servant can start a chat session with interesting customers.

A further advantage of the invention is that via the service platform audio-visual alerts may be generated for a particular customer or customer group.

According to the first aspect of the present invention a service order prioritization method is provided comprising:
- a service platform checking periodically its customer interfaces;
- the service platform determining an importance value for each detected new customer interface input;
- the service platform classifying each detected customer interface input into one priority class according to a determined importance value of the detected customer interface input;
- the service platform arranging all customer inputs in an order of importance by utilizing determined priority values of each detected customer interface input;
- the service platform evaluating whether at least one high importance customer input has been detected, and;
- the service platform showing the detected customer interface inputs in the order of importance in a feed window of a data processing apparatus of a customer servant.

According to the second aspect of the present invention a telecommunications network is provided comprising:
- data processing apparatuses of customers connected to the telecommunications network;
- a service platform embedded in a server comprising a processor unit, memory unit, input and output means, the service platform comprising:
   - several customer input and output interfaces of the service platform;
   - several customer servant input and output interfaces;
   - a database, and;
   - computer program code configured to, with the processor and the memory of the server, cause the service platform at least to:
      - check periodically customer interfaces of the service platform;
      - determine an importance value for each detected new customer interface input;
      - classify each detected customer interface input into one priority class according to a determined importance value of the detected customer interface input;
      - arrange all customer inputs in an order of importance by utilizing determined priority values of each detected customer interface input;
      - evaluate whether at least one high importance customer input has been detected, and;
      - show the detected customer interface inputs in the order of importance in a feed window of a data processing apparatus of a customer servant.

According to the third aspect of the present invention a computer-readable non-transitory data storage medium including a computer program for a service platform is provided comprising:
- computer readable code for checking periodically customer interfaces of the service platform;
- computer readable code for determining an importance value for each detected new customer interface input of the service platform;
- computer readable code for classifying each detected customer interface of the service platform input into one priority class according to a determined importance value of the detected customer interface input;
- computer readable code for arranging all customer inputs of the service platform in an order of importance by utilizing determined priority values of each detected customer interface input;
- computer readable code for evaluating whether at least one high importance customer input has been detected, and;
- computer readable code for showing the detected customer interface inputs in the order of importance in a feed window of a data processing apparatus of a customer servant of the service platform.

According to the fourth aspect of the present invention a service platform server according to the invention is provided comprising:
- a processor unit;
- a memory unit;
- input and output means, and;
- a user interface;
   - the processor unit and the memory unit configured to implement a service platform that is configured at least to:
      - check periodically customer interfaces of the service platform;
      - determine an importance value for each detected new customer interface input;
      - classify each detected customer interface input into one priority class according to a determined importance value of the detected customer interface input;
      - arrange all customer inputs in an order of importance by utilizing determined priority values of each detected customer interface input;
      - evaluate whether at least one high importance customer input has been detected, and;
      - show the detected customer interface inputs in the order of importance in a feed window of a data processing apparatus of a customer servant.

Some advantageous aspects of the invention are presented in the dependent claims.

Hereafter the invention shall be illustrated by using a selling process of a web store as an example. However, the invention is not limited to the exemplary web store but the service platform may be utilized also in other customer service applications.

The basic idea of the invention is the following when applied in a web store. The web store utilizes a software-based service platform in which both online customers and customer servants of the web store can input data depicting a selling or buying event. A customer can input data via different online or off-line interfaces. The customer can input data in the service platform according to the invention for example via web pages of the web store, via a chat session, via a social media interface, via a web store specific mobile application or by utilizing a sales engine (i.e. a comparator) of the web store.

The customer servant can advantageously input in the service platform control commands of different kind by which the view of the customer servant changes. In one advantageous embodiment also the view of the online customer may change at the same time due to a control command defined by the customer servant. One example of that is a special offer made to the customer utilizing an audio-visual alert.

The computer program implementing the service platform takes care of all inputs made by either the customer or customer servant. The computer program advantageously classifies each customer input to one importance class. The computer program is configured to show the important customer events before any other customer event that is classified to a less important customer input class.

The computer program implementing the service platform may also advantageously comprise means for saving information depicting a particular customer event and its class of importance to a database. The saved customer information may advantageously be used when the same customer contacts the web store later on. This way the customer needs which are central and important in the decision-making of the customer are known to the customer servant from the start at the beginning of the next shopping event of that particular customer. By knowing the customer history the service platform automatically or the customer servant can thus advantageously offer to the online customer also such additional information for the basis of his decision-making that otherwise might not come up during an online shopping session.

The functions of the service platform can also be implemented as a so-called cloud service, also called cloud computing. In the cloud computing service the program execution is spread out and outsourced to cloud computing service providers that are operating in the data network. Cloud computing may occur for example on the Internet. The web store customer is not aware of using a spread-out service, because the use experience corresponds to the feeling of a locally offered service. The customer only sees and experiences the web store service platform interface, just like in a direct connection with the web store server.

In the following, the invention will be described in detail. In the description, reference is made to the enclosed drawings, in which
- Figure 1: shows main functional components of the service platform according to the invention,
- Figure 2a: shows as an example a service platform arrangement according to the invention,
- Figure 2b: shows as an example a server utilized in the implementation of a service platform according to the invention,
- Figure 3a: shows as an exemplary flow chart the operational main steps that are utilized for accomplishing a customer servant view according to the invention,
- Figure 3b: shows as an exemplary flow chart the operational steps that are utilized for accomplishing offers to a special customer group,
- Figure 4: shows an example of a dashboard view of the customer servant.

The embodiments in the following description are given as examples only and someone skilled in the art can carry out the basic idea of the invention also in some other way than what is described in the description. Though the description may refer to a certain embodiment or embodiments in several places, this does not mean that the reference would be directed towards only one described embodiment or that the described characteristic would be usable only in one described embodiment. The individual characteristics of two or more embodiments may be combined and new embodiments of the invention may thus be provided.

The invention is described in context of a web store. However, the invention is not limited to the web store utilized in the following description. The invention may advantageously be utilized in web-based services of any kind.

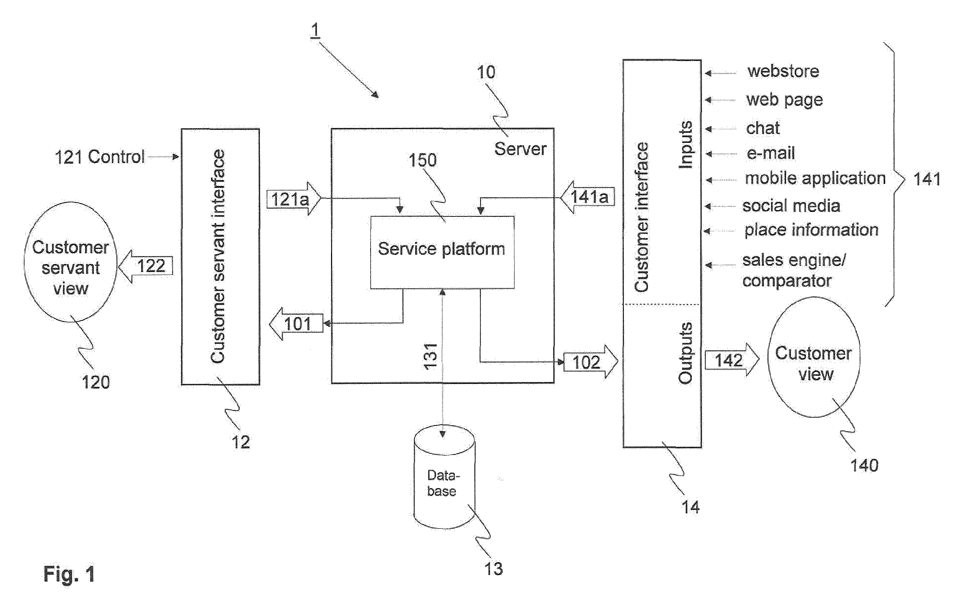

Figure 1 shows the main functional components of data processing system 1 of a web store that are utilized for accomplishing a service platform 150 according to the invention in an exemplary web store. Computer programs implementing the service platform 150 may be embedded in a server 10 of the web store. In another advantageous embodiment the server functions accomplishing the service platform may be executed in a cloud service outside the web store.

The service platform 150 according to the invention is implemented by a computer program that can provide both a customer interface 14 and a customer servant interface 12 of the service platform 150. Via the customer interface 14 a customer of the web store can contact service platform 150 of the web store via different kinds of media inputs 141.

The customer of the web store can establish a connection via Internet to the service platform 140 for example at least in the following ways. The customer may for example enter directly an actual web store of the web store company and from there he or she may advantageously be guided to the service platform 150 according to the invention. Alternatively, the customer may enter the service platform 150 via a link from a web page of the web store. The customer may establish the web page connection either from a conventional computer or a smart phone utilizing a web store specific mobile application. The customer may also contact the web store via a social media interface of the web store, for example via Facebook^{®} or Twitter^{®} of the web store. Via the above-mentioned media inputs 141 the customer may feed his or her service needs and/or requirements to the web store via the service platform 150 according to the invention when he or she is planning to make a purchase from the web store.

The customer may also utilize a comparator, also called a sales engine, of the web store before he or she makes a final decision about a planned purchase.

The customer may also send an e-mail to the e-mail box of the web store and ask additional information for making a purchase decision.

One other possibility is also that the customer starts a chat session with a customer servant of the web store either in the sales engine or the web page of the web store.

It is obvious to a person skilled in the art that the customer may utilize also other media interfaces than those mentioned above.

By utilizing one or more media interface inputs to the service platform 150 the customer can feed different kinds of customer-specific information to the service platform 150 of the web store. This is depicted in Figure 1 by an arrow 141 a.

An exemplary customer feed flow to the service platform 150 may be as follows. A new customer logs in to the web page of the web store. From there the customer starts to use the sales engine. The customer answers to a question of the sales engine. The customer selects one product information page in the sales engine. The customer selects one or more products for comparison in the sales engine. The customer starts a chat in the sales engine. The customer writes a new note in the chat session. The customer adds a product to the shopping basket. The customer gets an error message from the sales engine.

In the example above the inputted customer information is then processed in the service platform 150. Each of the above-mentioned customer events or feed actions generates a new feed event in the service platform 150. The outcome of the process of the service platform 150 is transmitted at least to the customer servant's data processing apparatus via the customer servant interface 12, references 101 and 122. The customer servant can see the outcome as a customer servant view 120 on a display of his or her data processing device.

The outcome of the process of the service platform 150 may also be transmitted to the customer via the customer interface 14, references 102 and 142. The customer can see the outcome of his or her service request as a customer view 140 on a display of his or her data processing device. In one advantageous embodiment the service platform 150 automatically or the customer servant may generate an audio-visual alert to the customer if he or she is detected to belong to a particular customer group.

In one advantageous embodiment the customer fed information may also be saved in a database 13 of the web store via a connection 131. The saved contact and/or customer information may later on be utilized in the service platform 150 for prioritizing different customer contacts that have been got, before those are shown in a customer servant view 120 on the display of a customer servant's computer. This way the customer servant of the web store can always first attend to the most important service action(s) before another less important service request.

The prioritization of the customer events or contacts may be based for example on a recorded customer contact time, media utilized by the customer for making the contact, selection(s) made by the customer in the sales engine, movement from one web page to another more important web page, a chat request from the customer, an e-mail from the customer, or geographical place of the customer. The geographical position data may be deduced from the customer's background data or his IP address.

**Table I: Some examples of customer event prioritization**

| **Customer event** | **Priority value** | **Comments** |
|---|---|---|
| The customer started a chat | **10** | Immediate actions! |
| An order confirmed | **10** | Increases work satisfaction |
| The customer moved to an important web page | **9** | For example sales campaign page |
| New message in the chat | **8** | Requires quick actions! |
| A product added to the shopping basket | **8** | Follow that information |
| An e-mail to the customer service | **8** | Requires actions later on! |
| The customer moved to a product page in the sales engine | **7** | Has the customer found a product? |
| The customer selected a product for comparison in the sales engine | **6** | |
| A new customer on the web page | **4** | |
| The customer answered a question of the sales engine | **4** | |
| The customer changed web page | **3** | |

Customer events that have a priority value **"10"** are always sent form the service platform 150 on the customer servant view 120. After customer events having priority value **"10"** customer events having priority value between **9-2** are shown in the order of the priority value. If there are too many customer events at the same time, the customer events having lower priority value may advantageously be discarded. A customer event classified in priority class "1" is always discarded right away. In the service platform 150 according to the invention the personnel of the web store can advantageously tailor priority values of at least some customer events according to their role in the context of the service platform.

If the customer has registered to the web store earlier, some of the customer information may be saved as a customer specific data to the database 13. In a new commerce situation with a registered customer the customer servant can then utilize also customer information saved to the database 13.

Based on previous customer events of a registered customer it can be defined an importance estimate for future events of that customer. The importance estimate of the customer may affect the importance of real-time events of that customer. In the service platform according to the invention important events and/or important customers are classified as more important than events of ordinary customers.

**Table II: Some examples for customer prioritization**

| **Customer event** | **Importance** | **Comments** |
|---|---|---|
| A customer added a product to the shopping basket | ***** | A potential customer |
| A customer has been on the same web page several times | *** | The customer is interested in that product |
| A customer compares products in the sales engine | *** | The customer may make a decision to buy |
| A customer has answered all questions in the sales engine | *** | Customer's history is utilized in later on |
| A customer has registered in the web store | ** | Important internal sales information |
| A customer has earlier asked for help in chat | * | The customer can be advised later on after log out |

A customer servant of the web store can login to the service platform 150 via his or her customer servant interface 12. The customer servant can choose from different customer servant views 120 one view at a time on his or her display unit. The selection of the customer servant view to be utilized may be accomplished by sending a control command 121 either via a keyboard or by activating an icon on the display of the computer of the customer servant, reference 121 a. The service platform 150 sends the processed customer events or contacts to the display unit of the customer servant, references 101 and 122.

The customer events or contacts are shown in an order that is based on prioritization algorithm of the selected customer servant view 120. The service platform 150 filters from all received customer events or contacts the most important ones at that moment and only those are in the first place shown in the customer servant view 120. This way the service platform 150 advantageously shows to the customer servant only a limited amount of service requests from all received service requests. The number of the shown service requests in the customer servant view 120 is small enough for the customer servant to manage all of them without haste.

The customer servant can utilize also several control commands 121 that are meant for maintenance purposes of the service platform 150. Some examples of those commands are his or her login and logout commands, customer servant view selection commands and messages or announcements to the customers or other customer servants that have been logged in the service platform 150.

The web store personnel may have different roles in context of the service platform according to the invention. An administrator of the service platform is a person that attends to general internal announcements concerning the service platform. The administrator also may control discussion between customer servants of the web store. A manager of the service platform is a person that attends to announcements and internal discussions concerning the service platform. A developer of the service platform is a person that attends to general internal announcements and internal discussions concerning the service platform. A customer servant of the service platform is a person that attends to chat sessions and internal discussions concerning the service platform. A viewer of the service platform is a person that attends to visitor information concerning the service platform. A salesman of the service platform is a person that attends to announcements of the sales engine.

**Table III: Some examples of internal maintenance event prioritization**

| **Customer servant event** | **Priority value** | **Comments** |
|---|---|---|
| A message to other customer servants | **9** | Important internal information |
| A storage alarm; lack of a product | **8** | Needs actions in the near future |
| Product has a new price | **5** | |
| A product's supplier information message | **5** | |
| New products available in the web store | **5** | Important internal sales information |

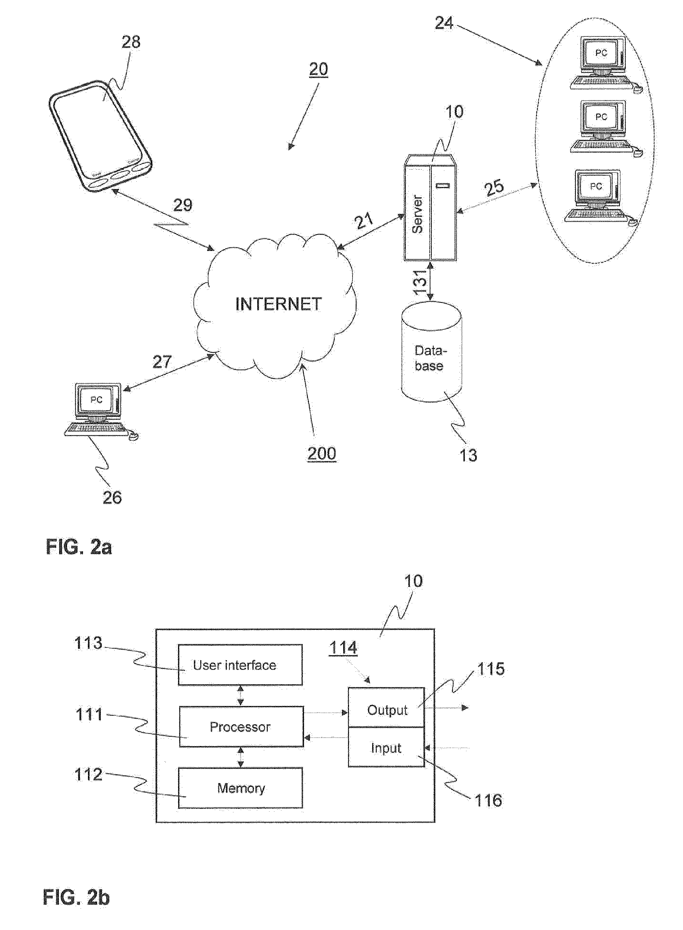

**Figure 2a** shows as an example the online service platform arrangement 20 according to the invention when it is implemented in a web store. Web store customers connect with their own data processing device 26, 28 via Internet 200 to a server 10, wherein has been installed a computer software that implements the functions of the service platform 150 according to the invention. Each web store customer can open from the server 10 one or more customer interfaces 141 according to the invention that are provided on the service platform 150.

Figure 2a shows two exemplary data processing devices 26 and 28 which an individual web store customer can utilize when making a purchase from the web store. Reference 26 shows a conventional computer which is connected to the Internet 200 via a fixed data communication connection 27. Reference 28 shows as an example a wireless data processing device connecting to the Internet via a wireless data transfer connection 29. The wirelessly functioning data processing device 28 can for example be a cellular network terminal such as a mobile phone, a palmtop computer or a portable computer equipped with a WLAN feature. Advantageously the above-mentioned wireless devices utilize a mobile application of the web store.

When it is desirable to use the web store, then for example a web page of the web store may be opened with the data processing device 26 or 28. For example a comparator embedded in the service platform 150 may be opened from the web page of the web store. The comparator functions as a sales engine of the web store. The customer may answer a question of the sales engine by using a graphic user interface created by the sales engine. The graphic user interface, which user interface advantageously is a question fourfold or a comparison line, opens on the display of the data processing device 26 or 28. The sales engine can simultaneously utilise both comparison lines and question fourfolds. Each individual question fourfold or comparison line opens up in the sales engine advantageously as a new web page.

The server 10, wherein the computer program implementing the service platform 150 according to the invention is installed, is advantageously connected with a fixed data transfer connection 21 to the Internet 200.

Reference 24 shows data processing devices used by the customer servants of one web store. When the service platform 150 according to the invention produces an indication that an important customer event has taken place or a customer classified in a group of important customers has logged in the service platform, then one of the service provider's customer servants can with his or her own data processing device 24 attend to this particular customer event. He or she can for example send a message to the data processing device 26 or 28 of the web store customer, for example a special offer to that particular customer, or propose starting an online chat session with that important customer. If the customer accepts the online chat offer presented by the customer servant, an online chat is advantageously started between the customer and the service provider's customer servant.

**Figure 2b** shows the operational main parts of the server 10 that may be utilized in the implementation of the service platform 150 according to the invention. The server 10 comprises a processor or processor means 111 which advantageously comprise an arithmetic logic unit, a number of different registers and control circuits. A data storing arrangement 112, such as a memory unit or memory means, wherein computer-readable information, programs or user data can be stored, has been connected to the processor means 111. The memory means 112 typically contain memory units, which allow both reading and writing functions (Random Access Memory, RAM), and memory units containing non-volatile memory from which data can only be read (Read Only Memory, ROM).

The server 10 also comprises an interface element 114, which comprises an input or input means 116 for receiving data from the web store customer's data processing device 26 or 28 via a data communications network 200, from the customer servant's data processing device 24 or from the separate database device 13. The data received with the input means 116 is advantageously transferred to be processed by the processor means 111 of the server 10.

The interface element 114 of the server 10 also comprises an output or output means 115, with which data is transferred from the processor means of the server 10 either to a data transfer network 200 and from there to a web store customer's data processing device 26 or 28, to the database device 13, or to a data processing device 24 of the customer servant.

The server 10 advantageously also comprises a user interface 113 which comprises means for receiving data and/or control commands from an administrator of the server 10. The user interface 113 can for example comprise a keyboard, a touch screen, a microphone, and a speaker.

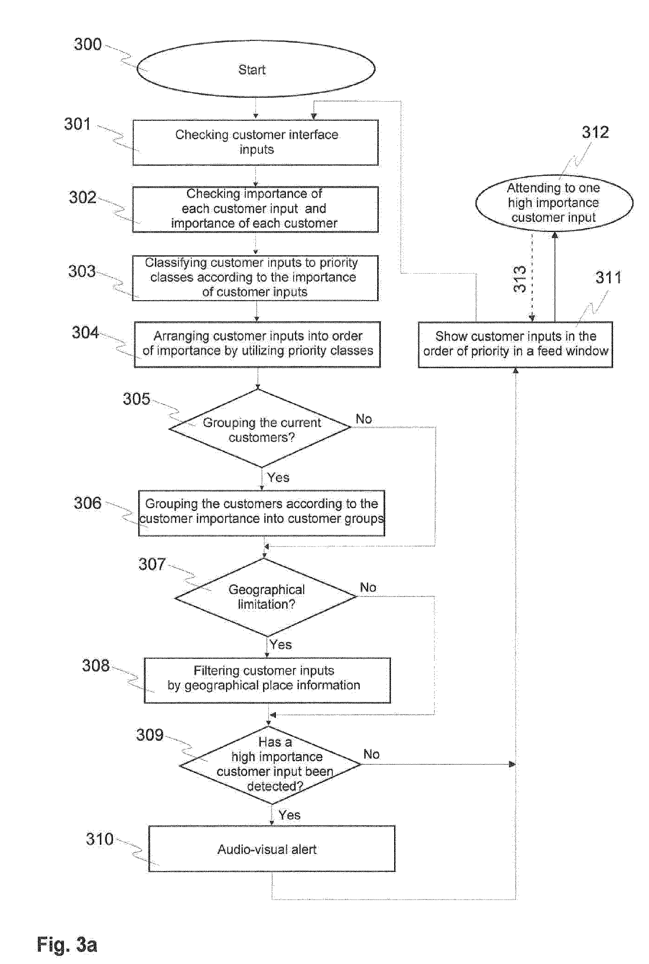

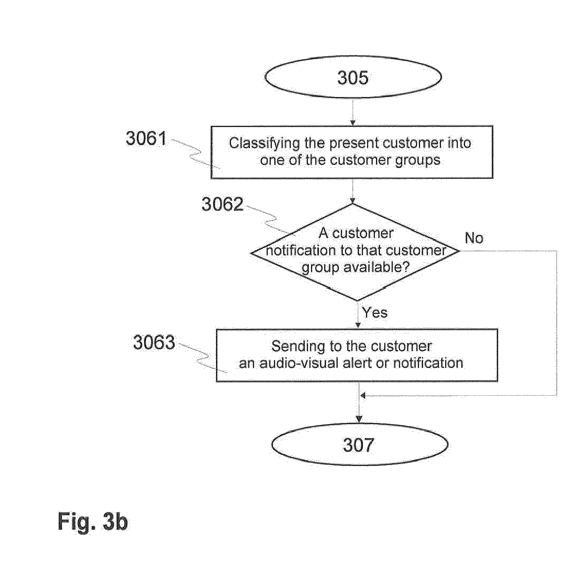

The processor means 111, the memory means 112, the interface element 114 and the user interface 113 are electrically connected together to systematically execute received and/or stored data or information in accordance with predetermined and substantially pre-programmed operational sequences. Such operational sequences also include the operational sequences described in connection with Figure 3, which implement the functions of the service platform arrangement according to the invention.

The detailed implementation of the logical units of the server 10 in Figure 2b is prior art to someone skilled in the art.

It is also obvious to someone skilled in the art that the functions of the service platform can advantageously be implemented as cloud service or cloud computing. In this advantageous embodiment the web store customer is not aware of that he or she uses a spread-out service, because the use experience corresponds to the view of a locally produced service platform. The web store customer only sees the service platform input and output interface, just as in the embodiment where the service platform is implemented in a server administered by the web store provider.

**Figure 3a** shows as an exemplary flowchart the main functions of the service platform 150 according to an embodiment of the invention when it is utilized in a web store.

In step 300 one or more web store customers contact one or more customer interfaces of the service platform 150 according to the invention in the server 10. At least one customer servant of the web store has logged in to the service platform. The web store customers may utilize for example the web page of the web store when they contact to the web store. In that case the first web page of the web store is advantageously displayed on the display unit of the customer's data processing device 26 or 28. However, the invention is not limited to the web interface of the service platform. Also other customer interfaces of the service platform may be utilized. Some examples of possible other customer interfaces are depicted in Figure 1.

In step 301 inputs of all customer interfaces of the service platform 150 are checked. A time stamp is advantageously added to each detected customer input or event. The time stamp may be one prioritization basis for customer events in the service platform 150.

In step 302 the service platform 150 determines an importance value for each detected customer event or input. The importance of each customer event may be established by utilizing priority criteria depicted in Table **I**, for example.

Also customer importance may advantageously be determined at the same time. Customer importance may be established by utilizing customer priority criteria depicted in Table **II**, for example.

In step 303 each customer input or event is classified to one priority class according to the determined importance value of that particular customer input or event. There may advantageously be ten priority classes, for example. The highest priority class may have priority number **"10",** for example.

In step 304 the service platform 150 arranges all customer inputs and events into an order of importance by utilizing the determined priority values of each customer input or event. The customer inputs and events having the highest priority class are determined to be shown first. If there are more than one customer inputs or events in each priority class, the customer event having the oldest time stamp in each priority class is on top of a display queue of that particular priority class.

In one advantageous embodiment of the invention the priority classification of customer inputs and events is time dependent. When the time progresses without any customer servant action, the priority class drops step by step towards priority number **"1".** Examples of this decrease process are shown in Table **IV.**

**Table IV: Some examples of priority class chance grounds**

| **Priority value** | **Comments** |
|---|---|
| **10** | Events are shown in chronological order; the oldest is shown at the top of the feed window. These events are shown until the event has been attended to. |
| **9** | Events are shown in chronological order; the oldest is shown after the event having priority 10. After ten minutes the priority value is changed to 8. |
| **8** | Events are shown in chronological order; the oldest is shown after events having priority 9. After five minutes the priority value is changed to 7. |
| **7** | Events are shown in chronological order; the oldest is shown after events having priority 8. After three minutes the priority value is changed to 6. |
| **6** | Events are shown in chronological order; the oldest is shown after events having priority 7. After two minutes the priority value is changed to 5. |
| **5** | Events are shown in chronological order; the oldest is shown after events having priority 6. After one minute the priority value is changed to 4. |
| **4** | Events are shown in chronological order; the oldest is shown after events having priority 5. After one minute the priority value is changed to 3. |
| **3** | Events are shown in chronological order; the oldest is shown after events having priority 4. After one minute the priority value is changed to 2 |
| **2** | Events are shown in chronological order; the oldest is shown after events having priority 3. After one minute the priority value is changed to 1 |
| **1** | These events are discarded. |
| | |
| **Geographical filtering** | If geographical filtering is applied, all events below priority value 7 are discarded. |

In step 305 it is evaluated whether the current customers should be grouped based on their importance as customers that were deduced in step 302. If the outcome in step 305 is "yes", the current customers are classified into several customer importance classes in step 306. In one advantageous embodiment also an audio-visual alert to a customer belonging to a particular customer group may be generated in the service platform 150 during step 306.

If in step 305 the outcome is "no", the prioritization process moves on to step 307. In step 307 it is evaluated whether the current customers or customer events should be filtered on the grounds of the geographical location of the online customers. If the outcome is "yes", the customer events of the current customers are filtered in step 308. This means that online customers outside the selected geographical area are discarded at that moment. In that case a customer servant attends only to online customers in the selected geographical area.

If in step 307 the outcome is "no", the prioritization process moves on to step 309.

In step 309 it is evaluated whether at least one high importance customer event has been detected in the prioritization process. If the outcome in step 309 is "yes", an audio-visual alert is generated in the service platform 150 in step 310 to the customer servant. One example of a high importance customer event is an audio-visual alert that was generated in step 306. Another example may be a case where a customer input or event is classified in the priority class "10" in step 303. After a high importance customer event detection in step 309 prioritization process proceeds to step 310.

If in step 309 the outcome is "no", the prioritization process proceeds directly to step 311.

In step 311 the prioritized customer events or inputs are shown in customer servant view 120 in the order that is determined in the prioritization process according to the invention.

After step 311 the process advantageously branches to a new prioritization process and a service request service process. The customer servant may advantageously define how fast the prioritization process of customer inputs or events is repeated. As a default value the prioritization process repeats itself advantageously after three seconds. However, a customer servant may change the recurrence speed to a more suitable speed.

In step 312 the customer servant attends to the most important customer event at that particular time. When the customer input or event has been fulfilled, the customer servant returns to the step 311. This is depicted in Figure 3a by a dash line 313.

In one advantageous embodiment of the invention after returning back to step 311 the service platform 150 shows all priority class 10 events that are unattended in an accelerated manner before returning to the normal showing manner.

Successive prioritization steps 301-312 are continued for so long that the customer servant logs out from the service platform 150.

**Figure 3b** shows as an exemplary flowchart some functions of the service platform 150 for accomplishing a customer notification during step 306 of Fig. 3a.

The notification process according to the invention advantageously starts when a customer event data comes from step 305.

In step 3061 the customer is classified into one of the predefined customer groups. The classification may be based for example on registration data of the customer, saved earlier shopping events or an action of the customer that in the service platform 150 according to the invention is considered to be an important one.

After customer classification in step 3062 it is evaluated if at least one notification for that particular customer group to which the present customer is classified exists.

If a notification exists, then in step 3063 the notification is sent to the online customer. Advantageously the notification is given as an audio-visual alert or notification.

In another advantageous embodiment an e-mail notification may be sent to off-line customers belonging to that particular customer group.

The process steps described in the flow charts of Figures 3a and 3b can be implemented with computer program commands which are executed in a suitable general-purpose or special purpose processor. The computer program commands can be stored in a computer-readable media, such as a data disk or a memory, from where the processor of the data processing device can retrieve said computer program commands and execute them. The references to computer-readable media can for example also contain special components, such as programmable USB Flash memories, logic arrays (FPLA), application-specific integrated circuits (ASIC) and signal processors (DSP).

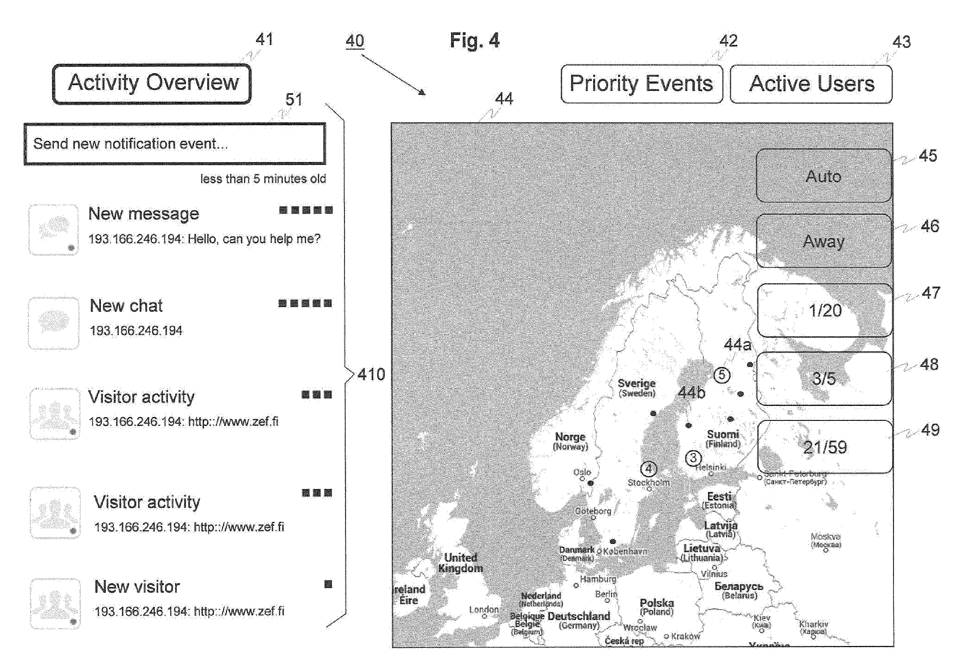

**Figure 4** shows an example of a customer servant view 40 on a display unit of his or her data processing device. The view may later on be also called a dashboard.

Reference 41 shows an exemplary "Activity Overview" icon on the screen of the customer servant's data processing device. In this example the customer servant has activated the "Activity Overview". By reference 410 are depicted exemplary customer events that are younger than five minutes in a feed window. The customer events are advantageously shown in the order of occurrence. The most important customer event is on the top.

In this example there are also shown three mode icons other than the dashboard. By activating mode icon 42 only events having the highest detected priority value are shown instead of the shown "Activity Overview" data. When this selection is active, all high priority events are advantageously marked and saved in the data base 13. In this mode the customer servant can concentrate on attending only to the important customer requests.

By activating mode icon 43 the customer servant may check a list of the current customers instead of the shown "Activity Overview".

By activating mode icon 51 the customer servant may send a notification to a particular customer or customer group. Also a notification to other customer servants or personnel of the web store may be sent by mode icon 51.

Also the map 44 is one type of mode icon. By activating the map the customer servant can zoom in or out on the map 44. What is left after the zooming operation on the map display defines what customer inputs or events are taken into account in the prioritization process of that particular customer servant. In the exemplary map of Fig. 4 one particular circle has a number inside, reference 44a. The number depicts that five customers are simultaneously online in the same geographical area. There can be seen on the map 44 that also at another place three customers are online simultaneously. At a third place four customers are online at that moment. By the map mode icon the customer servant may advantageously concentrate on serving for example the five customers in the place having reference 44a. Single customers are advantageously shown by a dot, reference 44b in this exemplary dashboard.

To the right of the dashboard 40 there are shown five other mode icons. By mode icon 45 the customer servant can change from an automatic prioritization mode to a manual mode. In the manual mode the customer servant may make some maintenance operations inside the service platform. He or she may for example fast forward or pause the service platform.

By mode icon 46 the customer servant can select to be either online or off-line to the service platform 150 according to the invention. The off-line status of this mode icon may be shown on the chat page of the web store.

The mode icon 47 shows how many customer servants are currently online in the web store. By selecting this icon the names of the customer servants online can advantageously be seen.

The mode icon 48 shows how many active connections there are at that moment. Number three means that there is a new message in three sessions. By number five is depicted the number of currently active connections.

The mode icon 49 shows how many customers are connected to the web store at that moment and how many have generated an activity indication to the service platform. In the example of Figure 4 there are fifty-nine customers on the web site and twenty-one are now considered active customers. An online customer is considered as an inactive customer when a predetermined time has lapsed from the last detected customer action.

The service platform according to the invention provides for both the online customer and customer servant flexible ways to change customer needs information during a purchasing event.

The customer can shop in a place customary for him or her on the Internet. For example the buying process may be started and accomplished in the Facebook^{®} interface of a web store instead of the web store's web pages.

The customer servant can immediately recognize any new customer irrespective of the customer interface utilized by the new customer in the service platform according to the invention.

The service platform offers to the online customer a possibility to browse suitable items in the service platform of the web store. The customer may also compare products or services in a sales engine that is embedded in the service platform. At the same time a customer servant may follow customer events and help a particular customer during his or her selection and decision making process. The customer servant may also make a special offer to the customer by utilizing information that the service platform 150 produces when the shopping process of the customer proceeds.

And finally, the well-informed customer servant can for example during one-to-one chat session assist the customer to reach the decision to buy and close the deal.

Some advantageous embodiments of the invention have been described above in the context of a web store. The invention is not limited to the embodiments described above, but the inventive idea can be applied in numerous ways within the scope of the claims.

## Claims

1. A service order prioritization method comprising:
- a service platform (150) checking periodically it
s customer interfaces,
**characterized in that** it further comprises:
- the service platform (150) determining (302) an importance value for each detected new customer interface input (141);
- the service platform (150) classifying (303) each detected customer interface input (141) into one priority class according to a determined importance value of the detected customer interface input (141);
- the service platform (150) arranging (304) all customer inputs (141) in an order of importance by utilizing determined priority values of each detected customer interface input (141);
- the service platform (150) evaluating (309) whether at least one high importance customer input has been detected, and;
- the service platform showing (311) the detected customer interface inputs in the order of importance in a feed window (410) of a data processing apparatus (24) of a customer servant.

2. The method according to claim 1, **characterized in that** the service platform (150) also classifies (306) an online customer, who has given the customer input (141), into a customer importance class, which is deduced either from real-time events of the customer detected in the service platform or from customer data saved in a database whereby the order of importance of the detected customer inputs (141) in the feed window (410) is based on the deduced customer importance class.

3. The method according to claim 2, **characterized in that** the service platform (150) sends a notification to the online customer who is classified to a particular customer class.

4. The method according to claim 2, **characterized in that** the service platform (150) filters (307, 308) the current online customer or customer event on the grounds of the geographical location of the online customer.

5. A data network arrangement (1) for prioritization of service requests comprising:
- a telecommunications network (200);
- data processing apparatuses (26, 29) of customers connected to the telecommunications network;
- a service platform (150) embedded in a server (10) comprising a processor unit (111), memory unit (112), input and output means (115, 116), the service platform comprising:
- several customer input and output interfaces (14) of the service platform (150);
- several customer servant input and output interfaces (12);
- a database (13), and;
- computer program code configured to, with the processor and the memory of the server, cause the service platform at least to:
- check (301) periodically customer interfaces (14) of the service platform (150);
- determine (302) an importance value for each detected new customer interface input (141);
- classify (303) each detected customer interface input (141) into one priority class according to a determined importance value of the detected customer interface input (141);
- arrange (304) all customer inputs (141) in an order of importance by utilizing determined priority values of each detected customer interface input (141);
- evaluate (309) whether at least one high importance customer input has been detected, and;
- show the detected customer interface inputs (141) in the order of importance in a feed window (410) of a data processing apparatus (24) of a customer servant.

6. The data network arrangement according to claim 5, **characterized in that** the service platform (150) is also configured to classify (304) an online customer, who has given the customer input (141), into a customer importance class, which is configured to be deduced either from real-time events of the customer detected in the service platform or from customer data saved in a database whereby the order of importance of the detected customer inputs in the feed window (410) is configured to be based on the deduced customer importance class.

7. The data network arrangement according to claim 6, **characterized in that** the service platform (150) is configured to send a notification to the online customer who is classified to a particular customer class.

8. The data network arrangement according to claim 6, **characterized in that** the service platform (150) is configured to filter (307, 308) the current online customer or customer event on the grounds of the geographical location of the online customer.

9. A computer-readable non-transitory data storage medium comprising computer executable components for prioritization of service requests of a service platform, the computer executable components comprising:
- computer readable code for checking (301) periodically customer interfaces of the service platform;
**characterized in that** the computer-readable non-transitory data storage medium further comprises:
- computer readable code for determining (302) an importance value for each detected new customer interface input (141) of the service platform (150);
- computer readable code for classifying (303) each detected customer interface input (141) of the service platform (150) into one priority class according to a determined importance value of the detected customer interface input (141);
- computer readable code for arranging (304) all customer inputs (141) of the service platform (150) in an order of importance by utilizing determined priority values of each detected customer interface input (141);
- computer readable code for evaluating (309) whether at least one high importance customer input (141) has been detected, and;
- computer readable code for showing (311) the detected customer interface inputs in the order of importance in a feed window (410) of a data processing apparatus (24) of a customer servant of the service platform (150).

10. The computer-readable non-transitory data storage medium according to claim 9, **characterized in that** further comprises computer readable code for classifying (305, 306) an online customer, who has given the customer input (141), into a customer importance class, which is deduced either from real-time events of the customer detected in the service platform or from customer data saved in a database whereby the order of importance of the detected customer inputs (141) in the feed window (410) is based on the deduced customer importance class.

11. The computer-readable non-transitory data storage medium according to claim 10, **characterized in that** further comprises computer readable code for sending a notification to the online customer who is classified (306) into a particular customer class.

12. The computer-readable non-transitory data storage medium according to claim 10, **characterized in that** further comprises computer readable code for filtering (307, 308) the current online customer or customer event on the grounds of the geographical location of the online customer.

13. A server (10) comprising:
- a processor unit (111);
- a memory unit (112);
- input and output means (115, 116), and;
- a user interface (113);
**characterized in that**
- the processor unit and the memory unit are configured to implement a service platform that is configured at least to:
- check (301) periodically customer interfaces (14) of the service platform (150);
- determine (302) an importance value for each detected new customer interface input (141);
- classify (303) each detected customer interface input (141) into one priority class according to a determined importance value of the detected customer interface input (141);
- arrange (304) all customer inputs in an order of importance by utilizing determined priority values of each detected customer interface input (141);
- evaluate (309) whether at least one high importance customer input has been detected, and;
- show (311) the detected customer interface inputs (141) in the order of importance in a feed window (410) of a data processing apparatus (24) of a customer servant.

14. The server according to claim 13, **characterized in that** the service platform (150) embedded in the server (10) is also configured to classify (305, 306) an online customer, who has given the customer input (141), into a customer importance class, which is configured to be deduced either from real-time events of the customer detected in the service platform (150) or from customer data saved in a database (13) whereby the order of importance of the detected customer inputs (141) in the feed window (410) is configured to be based on the deduced customer importance class.

15. The server according to claim 14, **characterized in that** the service platform (150) embedded in the server (10) is configured to send a notification to the online customer who is classified into a particular customer class.

16. The server according to claim 14, **characterized in that** the service platform (150) embedded in the server (10) is configured to filter (307, 308) the current online customer or customer event on the grounds of the geographical location of the online customer.
